(19) **Europäisches Patentamt / European Patent Office / Office européen des brevets**

(11) **EP 4 224 142 B1**

(12) **FASCICULE DE BREVET EUROPEEN**

(45) Date de publication et mention de la délivrance du brevet:
**24.09.2025 Bulletin 2025/39**

(21) Numéro de dépôt: **22213365.4**

(22) Date de dépôt: **14.12.2022**

(51) Classification Internationale des Brevets (IPC):
*G01N 17/00* *(2006.01)*

(52) Classification Coopérative des Brevets (CPC):
**G01N 17/006**

(54) **PROCÉDÉ DE DÉTECTION DE CORROSION ET D'ÉVALUATION D'INFILTRATION PAR MESURE DE VALEUR D'UNE CARACTÉRISTIQUE MAGNÉTIQUE**

VERFAHREN ZUR KORROSIONSERKENNUNG UND INFILTRATIONSBEURTEILUNG DURCH WERTMESSUNG EINER MAGNETISCHEN EIGENSCHAFT

METHOD FOR CORROSION DETECTION AND INFILTRATION EVALUATION BY MEASURING VALUE OF MAGNETIC CHARACTERISTIC

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **15.12.2021 FR 2113533**

(43) Date de publication de la demande:
**09.08.2023 Bulletin 2023/32**

(73) Titulaire: **Cerema**
**69500 Bron (FR)**

(72) Inventeurs:
• **IHAMOUTEN, Amine**
**Bron (FR)**
• **BOSC, Frédéric**
**Bron (FR)**
• **GUILBERT, David**
**Bron (FR)**
• **GAUDIN, Jean-Noël**
**Bron (FR)**
• **BRENUGAT, Marc**
**Bron (FR)**

(74) Mandataire: **Cabinet Camus Lebkiri**
**25 rue de Maubeuge**
**75009 Paris (FR)**

(56) Documents cités:
**DE-A1- 102017 129 573 US-A1- 2004 055 391**

**Description**

**DOMAINE TECHNIQUE DE L'INVENTION**

1. Le domaine technique de l'invention est celui de la détection ou/et de prévention de corrosion par mesure d'une valeur d'une caractéristique magnétique. Cette valeur mesurée est celle d'un champ magnétique d'un aimant à un emplacement donné.

Le document DE 10 2017 129573 A1 divulgue un procédé de détection de corrosion comprenant l'utilisation d'une paire d'aimants comme coupons de corrosion.

2. Notamment, le domaine technique de l'invention est celui de la détection et du suivi de la corrosion de portion métallique accolée un aimant.

3. Elle se rapporte notamment à la mesure d'une valeur caractéristique magnétique à un emplacement donné du champ magnétique d'un aimant d'un témoin sensible à la corrosion présent dans une paroi d'une structure du génie civil, pour la prévention d'une corrosion d'au moins une armature métallique dans un enrobage poreux formant la paroi. L'enrobage peut être en béton par exemple. Par « un enrobage » on entend une couche poreuse à l'état solide enrobant l'armature métallique. Par exemple, dans le cas d'une structure du génie civil en béton armé, le béton est considéré comme l'enrobage. Ainsi, l'invention peut à l'aide d'un témoin prévenir contre une corrosion d'une armature métallique d'une paroi d'une structure du génie civil.

4. De manière générale, la présente invention peut être utilisée pour détecter et suivre la corrosion dans tous types d'armature métallique difficilement accessible.

5. La présente invention concerne donc la détection d'emplacement de corrosion à partir de données magnétiques et en particulier la détection de corrosion d'un organe à partir d'une lecture ou mesure d'une valeur caractéristique magnétique à un emplacement donné d'un champ magnétique d'un aimant permanent.

**ARRIERE-PLAN TECHNOLOGIQUE DE L'INVENTION**

6. Il existe différents moyens de déduction de corrosion d'une portion métallique, qu'elle soit visuelle, chimique, résistivité électrique ou par onde tel que les ultrasons.

7. Cependant, certains de ces moyens nécessitent d'avoir un accès direct à la portion métallique ce qui n'est pas toujours le cas, par exemple pour l'armature métallique enrobée dans du béton d'une paroi en béton armé.

8. Il est avantageux de connaître l'état de l'enrobage pour prévenir le vieillissement de l'armature.

9. En effet, si l'on exclut son vieillissement naturel, la durée de vie d'une structure du génie civil par exemple en béton armé, peut être limitée par la pénétration d'agents agressifs tels que les ions de chlorure ou par les cycles de gel-dégel qui entraînent un gonflement et des fissurations ainsi qu'un écaillage des surfaces exposées aux sels de déverglaçage.

10. Un facteur commun à ces pathologies est la corrosion. La quantification de cette corrosion en moyenne ou en gradient surfacique est subséquemment une phase primordiale dans le diagnostic des structures maritimes.

11. Des contrôles par carottage sur le béton armé sont régulièrement effectués par les maîtres d'ouvrages pour connaître la concentration en ions chlorure et ainsi estimer l'état d'avancement d'une éventuelle dégradation en utilisant des modèles prédictifs permettant d'optimiser les réparations des enrobages. Malheureusement, ces contrôles par carottage sont destructifs, ce qui minimise l'échantillonnage via le carottage, et donc limitent l'estimation de l'état d'avancement de la dégradation au niveau de l'ensemble de la structure.

12. Aussi, en terme opérationnel, la méthode communément utilisée pour la surveillance et la prévention face à de telles pathologies implique des inspections visuelles régulières pour le relevé des fissurations débouchant à la surface des parois de la structure, suivies de réparations sous forme d'enrobage pour empêcher l'eau chlorée d'atteindre les aciers.

13. Par ailleurs, différentes techniques de contrôle non destructif (CND) existent et permettent d'estimer des paramètres significatifs (indicateurs performanciels) de la durée de vie d'une structure, telle que le taux de saturation des bétons et la porosité.

14. Néanmoins, des difficultés surviennent dans l'identification des méthodes rentables et reproductibles fournissant des données utiles sur de longues périodes de temps, puisque le phénomène de corrosion des armatures des structures tend à se produire lentement.

15. Dans certaines applications, des techniques de surveillance intégrées sont mises en œuvre utilisant des capteurs de différentes technologies placés dans le béton d'enrobage dans le but de mesurer la concentration des chlorures.

16. Par exemple il est connu un système de détection de corrosion comportant un témoin comprenant une résistance électrique qui augmente quand le témoin est corrodé, un moyen de mesure de la résistance et une puce RFID permettant lors d'un contrôle d'alimenter le moyen de mesure de la résistance et transmettre l'information à un lecteur extérieur.

17. Cependant un tel témoin a un coût élevé et en cas de détérioration de la puce RFID ou du moyen de mesure, ou encore d'une connexion entre les différents éléments du témoin, le lecteur extérieur recevra une information erronée.

18. En outre, le système peut comprendre un interrogateur en dehors de la paroi de la structure et un témoin dans la paroi, l'interrogateur comprend un générateur de champ magnétique comprenant un radar à induction ou à onde électromagnétique et un lecteur de champ magnétique et le témoin peut comprendre un organe de maintien non magnétique et non métallique tel qu'un polymère ou en résine ABS et un conducteur corrodable. La corrosion peut être mesurée en fournissant par le générateur un champ magnétique primaire vers le béton, le conducteur corrodable génère un courant induit formant un second champ magnétique et l'interrogateur lit le second champ magnétique généré par le conducteur corrodable.

19. Cependant un tel témoin ne permet pas de fournir une information lorsque le conducteur corrodable a subi une corrosion suffisamment élevée pour ne plus avoir de conductivité entre ces extrémités. En outre le radar électromagnétique est un outil actif qui propage une onde jusqu'au témoin qui dépend de plusieurs facteurs dont des facteurs d'environnement tel que le taux d'humidité et du taux de chlorure entre le radar et le témoin c'est-à-dire dans la structure et en dehors. Ainsi le résultat de lecture ne sera pas identique en fonction de la météo et ne sont pas précis puisqu'ils sont sensibles aux différents facteurs de l'environnement. Enfin, un tel témoin doit être cartographié pendant la construction de la structure au risque sinon que le radar transmette et que le lecteur lise des ondes provenant d'autres éléments de la structure pouvant renvoyer les ondes tel que l'armement de la structure ou des débris métalliques dans le béton. Enfin de tels témoins doivent être suffisamment volumineux pour permettre de refléter l'onde provenant de l'appareil actif par exemple le radar électromagnétique, ce volume peut entraîner des détériorations de la structure.

20. Ces différents témoins et systèmes ont donc des coûts extrêmement élevés en termes de déploiement à l'échelle d'une structure volumineuse, et présentent encore des contraintes techniques majeures (robustesse, fiabilité, autonomie.)

21. Le document US2004100278 décrit en outre un dispositif et son procédé, mesurant des propriétés de résonance ferromagnétique en appliquant un champ magnétique à la structure par agencement d'un aimant près de la structure. La résonance ferromagnétique sera différente en fonction de l'état de corrosion de l'armature corrodée.

22. Ce dispositif ne permet pas de prévenir la corrosion mais de mesurer l'état de corrosion de l'armature. Il n'est donc pas possible de réaliser de la maintenance préventive pour empêcher la corrosion de l'armature puisque la corrosion de l'armature a déjà commencé lorsque l'on détecte un état de corrosion.

23. En outre, ces différentes solutions entraînent des évaluations par ciblage ce qui rend fastidieux la démarche d'évaluation. Par exemple, dans le cas d'utilisation de capteur de mesure, il doit être relié à la portion métallique ou avoir son antenne en vis-à-vis du témoin à mesurer et donc ne permettent pas d'obtenir d'informations de corrosion à partir d'une zone plus large par exemple que le volume en face de l'antenne du capteur.

24. Enfin, une des problématiques est que la structure peut varier, par exemple l'épaisseur peut augmenter ou se réduire par le taux d'humidité, la chaleur pouvant fausser des valeurs de mesures.

## RESUME DE L'INVENTION

25. L'invention offre une solution à au moins un des problèmes évoqués précédemment, en comparant une mesure d'une valeur de caractéristique magnétique à un emplacement donné d'un champ magnétique d'un aimant avec une donnée de champ magnétique acquise pour en déduire une corrosion.

26. Un aspect de l'invention concerne un procédé de détection de corrosion d'une couche corrodable ferromagnétique comprenant :

a) une étape d'acquisition et de stockage de données dans une mémoire dont au moins des données:

o de différents emplacements d'au moins un aimant permanent dans un repère tridimensionnel global X, Y, Z,

o de valeur de caractéristique magnétique (B%, B, $\vec{M}$) pour chaque aimant dans un repère tridimensionnel propre à l'aimant,

b) une étape de détermination d'un emplacement d'un appareil de mesure d'une valeur de caractéristique magnétique (B), distant de l'au moins un aimant, dans le repère tridimensionnel global par un processeur d'un dispositif de détection,

c) une étape de mesures d'une valeur d'une caractéristique magnétique (B) au moyen de l'appareil de mesure à l'emplacement déterminé à l'étape de détermination, et d'enregistrement, dans une base de données, la valeur de la mesure, l'emplacement et la date de la mesure,

d) une étape d'estimation par le processeur d'au moins la valeur d'une caractéristique magnétique (B%, B, $\vec{M}$) d'au moins un aimant selon son repère tridimensionnel propre, en fonction de la valeur mesurée à l'étape de mesures et de l'emplacement de l'aimant acquis à l'étape d'acquisition,

e) une étape de comparaison de la valeur caractéristique magnétique (B%, B, $\vec{M}$) estimée d'au moins un aimant et celle estimée précédemment ou acquise,

f) une étape de déduction d'une corrosion de la couche corrodable ferromagnétique entre l'au moins un emplacement de l'aimant et l'emplacement de l'appareil en fonction de la comparaison de valeur caractéristique magnétique réalisée à l'étape de comparaison.

27. Grâce à l'invention, il est possible de déduire une corrosion d'une couche corrodable ferromagnétique en comparant une valeur d'une caractéristique magnétique de l'aimant selon son repère. **En** effet, si une couche corrodable ferromagnétique est en parfait état, la valeur de caractéristique magnétique est très faible du fait du champ magnétique court-circuité par la couche corrodable ferromagnétique alors que si elle est corrodée, la valeur de caractéristique magnétique se rapproche de celle de l'aimant sans couche corrodable ferromagnétique puisqu'une fois corrodée, elle ne court-circuite plus ou peu le champ magnétique. **En** outre, le fait d'estimer la valeur d'une caractéristique magnétique (B, $\vec{M}$) de l'aimant selon son propre repère permet de diminuer des erreurs d'estimation de corrosion, par exemple une erreur liée à la distance entre l'emplacement de mesure et l'aimant qui a changé due par exemple à une dilatation de la paroi (par exemple dû à un gel/dégel) **En** effet, si la valeur mesurée est directement comparée alors que l'emplacement est erroné, la déduction de corrosion peut aussi être erronée. Le fait d'estimer la valeur d'une caractéristique magnétique (B, $\vec{M}$) de l'aimant selon son propre repère permet aussi de limiter le risque qu'un agent perturbateur du flux magnétique puisse entraîner une erreur de mesure, en détectant cet agent perturbateur et en estimant la valeur en prenant en compte la perturbation par cet agent.

28. Outre les caractéristiques qui viennent d'être évoquées dans le paragraphe précédent, le procédé de détection de corrosion selon un aspect de l'invention peut présenter une ou plusieurs caractéristiques complémentaires parmi les suivantes, considérées individuellement ou selon toutes les combinaisons techniquement possibles :

29. Selon un mode de réalisation, la valeur d'une caractéristique magnétique mesurée est une unité arbitraire d'une densité de flux magnétique.

30. Selon un mode de réalisation, chaque aimant est accolé à un élément métallique ferromagnétique formant la couche corrodable ferromagnétique et en ce que l'étape d'acquisition et de stockage de données comprend en outre des données de valeurs de caractéristiques magnétiques (B, $\vec{M}$) en fonction de l'épaisseur de l'élément métallique ferromagnétique non corrodé avec les composants du repère tridimensionnel propre à l'aimant x, y et z.

31. Selon un exemple de ce mode de réalisation la valeur caractéristique magnétique acquise de l'aimant est basée avec l'élément métallique ferromagnétique formant la couche corrodable ferromagnétique, et si celle estimée est supérieure d'au moins une valeur prédéterminée à celle acquise alors l'étape f) de déduction en déduit que la couche corrodable ferromagnétique est corrodée.

32. Selon un autre exemple de ce mode de réalisation la valeur caractéristique magnétique acquise de l'aimant est basée sans l'élément métallique ferromagnétique formant la couche corrodable ferromagnétique, et si celle estimée est inférieure à une valeur prédéterminée additionnée à celle acquise alors l'étape f) de déduction en déduit que la couche corrodable ferromagnétique est corrodée.

33. Selon un autre exemple de ce mode de réalisation la valeur caractéristique magnétique acquise de l'aimant est basée sur une mesure à un premier instant, si celle estimée à un instant ultérieur au premier instant est supérieure d'au moins une valeur prédéterminée à celle acquise lors d'une mesure au premier instant alors l'étape f) de déduction en déduit que la couche corrodable ferromagnétique est corrodée.

34. Selon un exemple de ce mode de réalisation, la mémoire comprend une courbe de calibration de la valeur caractéristique magnétique de l'aimant par rapport à la corrosion de la couche corrodable ferromagnétique accolée à l'aimant et en ce que l'étape f) de déduction d'une corrosion de la couche corrodable ferromagnétique comprend l'utilisation de cette courbe par une méthode inverse pour en déduire une valeur d'état de corrosion de la couche corrodable ferromagnétique.

35. Cet exemple permet de donner un état de corrosion, par exemple un pourcentage de corrosion de la couche corrodable ferromagnétique ou encore une épaisseur de couche ferromagnétique restante non corrodée.

36. Selon cet exemple, le procédé utilise une méthode inverse pour déterminer à partir de la courbe de calibration, un état de corrosion et en outre une possibilité d'un état d'infiltration d'un agent pathogène. En effet, on peut réaliser une courbe de calibration en laboratoire qui peut être modifiée par expérience, dans laquelle il est mesuré en laboratoire une pluralité de valeurs caractéristiques magnétiques de témoins comprenant chacun un aimant identique et une couche corrodable initialement identiques (même matériau et même épaisseur) à une même ou différentes distances prédéterminées pour calculer à partir de la loi de Biot Savart un moment magnétique de chaque témoin, dans laquelle les différentes mesures sont réalisées en ayant leurs couches corrodables selon différents taux de corrosion prédéterminés qui peuvent être déterminés en fonction d'une teneur en chlorure dans une structure par expérience, en reliant chaque valeur de moment magnétique mesurée à la teneur en chlorure dans une structure correspondante. Ainsi par la méthode inverse, on mesure ou calcule le moment magnétique du capteur à partir de l'appareil et par la méthode inverse déduire le taux de corrosion et/ou selon le besoin, une teneur en chlorure à partir de la mesure du moment magnétique en utilisant la courbe de calibration réalisée en laboratoire.

37. Selon un mode de réalisation, le procédé comprend une pluralité d'étapes de détermination d'emplacement de l'appareil et d'étapes de mesures à des emplacements différents dans une zone limitée et en ce que l'estimation de la valeur caractéristique est affinée à chaque mesure de densité de flux magnétique (B) d'un emplacement. Cela permet de s'adapter à une modification de la distance réelle entre l'aimant et l'appareil de mesure ou d'un autre aimant produisant un champ magnétique dans une zone proche de l'aimant pour lequel une valeur est estimée. Par exemple, dans le cas de deux aimants proches l'un de l'autre contre une couche corrodable ferromagnétique, tant que la couche corrodable ferromagnétique n'est pas corrodée, il n'y aura pas d'incidence sur la mesure car la couche corrodable ferromagnétique des aimants va court-circuiter leur champ magnétique mais lorsque la couche corrodable ferromagnétique des aimants est corrodée, la mesure par l'appareil de mesure à l'emplacement déterminé peut capter le champ magnétique d'un ou des deux aimants et estimer une mauvaise valeur d'une caractéristique magnétique (B, *M*) de l'aimant et donc une déduction de corrosion de la couche corrodée ferromagnétique mais pas forcément au bon endroit. Le fait d'utiliser plusieurs mesures dans une zone prédéterminée par rapport à l'aimant permet d'estimer plus précisément la valeur d'une caractéristique magnétique (B, $\vec{M}$) de l'aimant réel puisqu'une des mesures par l'appareil au premier deuxième, troisième etc. emplacements sera forcément moins influencée par l'autre aimant.

38. Selon un mode de réalisation, le modèle utilise la loi de Biot-Savart pour estimer la valeur d'une caractéristique magnétique (B, M) selon son repère tridimensionnel propre x, y et z. Connaissant l'emplacement de l'aimant et celle de l'appareil, cela permet de calculer et d'estimer facilement le moment magnétique de l'aimant dans son repère.

39. Selon un mode de réalisation, l'étape d'acquisition et de stockage de données comprend en outre des données d'orientation des pôles des aimants par rapport au point d'origine du repère global. Cela permet d'estimer un aimant orienté aléatoirement par rapport à l'emplacement de mesure. Par exemple dans le cas d'une paroi comprenant un enrobage poreux dans lequel un témoin comprenant l'aimant et la couche corrodable, le témoin peut avoir été soit aléatoirement positionné, soit désorienté lors de la procédure de coulage de l'enrobage poreux, l'étape d'acquisition comprend une mesure d'orientation de l'aimant par rapport à la surface d'auscultation pour acquérir l'orientation et ainsi de prendre en compte l'orientation de l'aimant par rapport à la surface contre lequel l'appareil de mesure réalise la mesure à l'emplacement déterminé. L'orientation de l'aimant peut être effectuée à l'aide de l'appareil de mesure ou encore d'une boussole. Ainsi seulement dans le cas où l'aimant est positionné en ayant sa face ayant le pôle nord et sud en parallèle avec la face de la paroi, l'aimant sera inexploitable ou difficilement exploitable.

40. Par exemple l'appareil comprend un magnétomètre avec sonde de Hall pour permettre de mesurer les directions et sens du champ magnétique et ainsi en déterminer l'orientation de l'aimant. Par exemple un dôme régulier représentera un aimant positionné tel qu'une face comprenant le nord et le sud est perpendiculaire à la sonde du magnétomètre permettant d'indiquer que cette face de l'aimant est parallèle à la surface d'auscultation et si le dôme est irrégulier, l'appareil peut comprendre un facteur correctif permettant d'indiquer l'orientation de la surface de l'aimant par rapport à sa sonde.

41. Selon un mode de réalisation, le procédé peut comprend en outre une étape d'estimation de l'orientation de l'aimant à l'aide des valeurs d'une caractéristique magnétique mesurées et l'étape d'estimation par le processeur d'au moins la valeur d'une caractéristique magnétique estimée est fonction de l'orientation déterminée. Cela permet de prendre en compte le cas d'une orientation différente de l'aimant par rapport à l'origine. Par exemple, dans le cas d'un témoin comprenant un aimant et une couche corrodable dans une paroi, en cas de fissure traversant la zone de l'aimant, l'aimant peut être légèrement incliné par rapport à son orientation initiale et donc modifier la valeur de la caractéristique magnétique (B, m) à mesurer sur la face de la paroi par rapport à une valeur mesurée si l'aimant avait gardé son orientation initiale.

42. Selon un mode de réalisation, dans lequel un témoin de corrosion est situé dans un enrobage poreux d'une paroi, notamment en béton armé, le témoin de corrosion comprenant un des aimants et au moins une couche corrodable ferromagnétique solidaire de l'aimant reliant le pôle nord au sud, et dans lequel l'étape de déduction d'une corrosion de la couche corrodable ferromagnétique et celle de la couche corrodable ferromagnétique du témoin.

43. Un tel témoin permet ainsi, lorsqu'il est placé entre l'armature et la surface de la paroi contre laquelle la mesure est réalisée par l'appareil de mesure permet en cas de détérioration de la couche corrodable ferromagnétique d'estimer par le processeur au moins la valeur d'une caractéristique magnétique (B, *M*) de l'aimant par le biais de la mesure ou des mesures par l'appareil de mesure, supérieure à celle estimée lorsque la couche corrodable ferromagnétique était en parfait état et ainsi indiquer à un opérateur de maintenance que la paroi poreuse comprend des agents pathogènes à la corrosion au moins jusqu'à l'emplacement du témoin comprenant cette couche corrodable ferromagnétique.

44. Selon un mode de réalisation, l'étape d'acquisition de donnée d'emplacement des aimants dans le repère global X, Y, Z comprend :

a) une sous-étape de recherche de signal d'une densité de flux magnétique (B) au moyen de l'appareil de mesure d'une valeur de caractéristique magnétique du champ magnétique dans une zone limitée et de mesure et d'enregistrement de la valeur du signal la plus importante de chaque zone limitée,

b) une sous-étape d'enregistrement d'un emplacement dans le repère tridimensionnel global par un processeur dans une mémoire lorsque l'appareil de mesure a mesuré une valeur d'une caractéristique magnétique la plus importante,

c) une sous-étape de déduction de la distance entre l'aimant et l'emplacement et l'enregistrement de l'emplacement de chaque aimant permanent dans un repère tridimensionnel global.

45. Un tel mode de réalisation, permet d'une part d'obtenir une référence de départ d'une ou de valeurs d'une caractéristique magnétique d'un champ magnétique fourni par l'aimant localisé à un emplacement de mesure, et d'autre part d'acquérir des données pour cartographier l'emplacement de l'aimant par exemple du témoin.

46. Un autre aspect de l'invention concerne aussi un procédé d'estimation de la teneur d'un agent pathogène dans une paroi comprenant un emballage poreux , comprenant :

- le procédé de détection de corrosion décrit précédemment,

- une étape de déduction d'infiltration d'agent pathogène dans la paroi en fonction d'une courbe de calibration, des emplacements du ou des témoins comprenant l'aimant et des évaluations de corrosion de la couche corrodable ferromagnétique.

47. Cela permet à des agents de maintenance d'estimer le moment et la localisation d'une maintenance préventive en resolidifiant l'enrobage poreux de la paroi pour éviter que l'armature ne soit endommagée.

48. Selon cet exemple, le procédé utilise une méthode inverse pour déterminer à partir d'une courbe de calibration réalisée par laboratoire ou par expérience, l'état d'infiltration d'un agent pathogène. En effet, on peut réaliser une courbe de calibration en laboratoire qui peut être modifiée par expérience, dans laquelle il est mesuré en laboratoire une pluralité de valeurs d'une caractéristique magnétique de témoins comprenant l'aimant et une couche corrodable initialement identiques (même matériau et même épaisseur) à une même ou différentes distances prédéterminées, et ayant leurs couches corrodables selon différents taux de corrosion prédéterminés en fonction d'une teneur en chlorure dans une structure et à partir de la loi de Biot Savart en déterminer une valeur de moment magnétique pour réaliser cette courbe de calibration en reliant chaque valeur de moment magnétique à la teneur en chlorure dans une structure correspondante. Ainsi par la méthode inverse, on peut mesurer ou calculer le moment magnétique du capteur à partir de l'appareil et utiliser la courbe de calibration réalisée en laboratoire pour déterminer la teneur en chlorure de la portion de structure comprenant le témoin en fonction du moment magnétique du capteur, et donc par approche inverse déduire une teneur en chlorure à partir de la mesure du moment magnétique.
49. L'invention est donc susceptible d'être utilisée plus particulièrement pour la détection d'infiltration d'agent pathogène pouvant entraîner une corrosion d'une armature dans les structures des infrastructures du génie civil (bâtiments, barrages, ponts, tunnels, piscine etc.), notamment les structures des infrastructures maritimes et les fondations d'ouvrages côtiers ou en mer (digues, jetées, éoliennes, plates-formes offshores, barrage marémotrices, hydroliennes, etc.). Une structure d"une infrastructure peut être une partie de l'infrastructure par exemple un mur, poteau ou encore une portion de ceux -ci.
50. L'invention permet d'être utilisée dans un contexte de maintenance préventive puisque en détectant une zone infiltrée par un agent pathogène, il est possible pour l'agent de maintenance de limiter la propagation d'une pathologie, par exemple en étanchéifiant la zone détectée ou encore en remplaçant (destruction de la paroi poreuse (par exemple béton) et maçonnerie d'une nouvelle paroi poreuse) la zone détectée pour prolonger la durée de vie résiduelle de l'infrastructure et donc limiter les coûts liés à l'entretien de l'ouvrage. **En** effet, en réalisant la maintenance préventive, la structure ne sera pas ou sera moins vite corrodée et donc le bâtiment aura une durée de vie plus important sans travaux très importants qui sont très coûteux.
51. Selon un mode de réalisation l'étape de déduction d'infiltration d'agent pathogène dans la paroi en fonction d'une courbe de calibration comprend une sous étape :

- d'estimation de la localisation des zones infiltrées dans le repère global d'agent pathogène dans l'enrobage en fonction des emplacements de l'aimant de chaque témoin ayant une couche corrodée ferromagnétique, des informations de valeur d'état de corrosion déterminées des différentes couches ferromagnétiques et du temps entre les mesures déduisant une corrosion de la couche corrodable ferromagnétique du témoin,

- de déduction de taux d'infiltration d'agent pathogène dans chaque zone estimée dans la paroi en fonction d'une courbe de calibration, des emplacements de l'aimant de chaque témoin et des évaluations de corrosion.

52. Selon un exemple la sous étape d'estimation de la localisation des zones infiltrées estime en outre une zone intermédiaire entre deux zones voisines infiltrées non juxtaposées et la sous étape de déduction de taux d'infiltration d'agent pathogène en déduit un taux d'infiltration.
53. Selon un mode de réalisation, l'étape de déduction d'infiltration d'agent pathogène dans la paroi est fonction des différentes estimations de corrosion d'un ou de plusieurs témoins dans le temps.
54. Selon un mode de réalisation, l'étape de déduction d'infiltration d'agent pathogène dans la paroi est fonction des différentes estimations de corrosion des autres zones voisines dans le temps. Cela permet d'identifier le rayonnement d'infiltration d'agent pathogène.

55. Selon un mode de réalisation, le procédé comprend une étape de modélisation de la paroi comprenant un enrobage poreux et une armature coulée dans l'enrobage et de l'emplacement des différents aimants de chaque témoin comprenant les aimants dans la paroi et une étape de modélisation et d'affichage de l'estimation de la teneur d'un agent dans la paroi en affichant les zones localisées estimées et leurs taux d'infiltration déduits. Cela permet de produire une cartographie de l'infiltration de l'agent pathogène.

56. L'invention concerne aussi un dispositif de détection autonome pour la mise en œuvre du procédé de détection de corrosion décrit précédemment avec ou sans les différentes caractéristiques des modes de réalisations décrites précédemment, comprenant le processeur, la mémoire et l'appareil de mesure de densité de flux magnétique et en ce qu'il comprend un dispositif de déplacement de l'appareil de mesure selon au moins deux axes du repère global pour le déplacer face à la surface d'auscultation d'une paroi et en ce que les déplacements de l'appareil de mesure sont commandés par une unité de commande comprenant le processeur en fonction des valeurs mesurées d'une caractéristique magnétique et/ou d'emplacement de différents aimants acquis.

57. Selon un mode de réalisation, l'appareil est en outre adapté à produire le procédé d'estimation de la teneur d'un agent pathogène décrit précédemment.

58. L'invention et ses différentes applications seront mieux comprises à la lecture de la description qui suit et à l'examen des figures qui l'accompagnent.

## BREVE DESCRIPTION DES FIGURES

59. Les figures sont présentées à titre indicatif et nullement limitatif de l'invention.

60. [Fig. 1] montre une représentation schématique d'un bloc diagramme du procédé de détection de corrosion selon l'invention.

61. [Fig. 2] montre une représentation schématique d'un premier exemple de mise en situation du procédé de détection de corrosion selon l'invention

62. [Fig. 3] montre une représentation schématique d'une courbe de mesure de flux magnétique de témoins selon un état de corrosion de leur couche corrodable ferromagnétique.

63. [Fig. 4] montre une représentation schématique d'une courbe représentant la variation de flux magnétique en fonction du temps de témoins selon différents états de corrosion et de distance de mesure.

64. [Fig. 5] montre une représentation schématique de l'exemple de la figure 2 en situation d'infiltration d'agent pathogène.

65. [Fig. 6] montre une représentation schématique temporelle de la variation relative de flux magnétique B% des témoins de l'exemple de la figure 5.

66. [Fig. 7] montre une représentation schématique de déduction d'infiltration d'agent pathogène de l'exemple de la figure 2 avec la fissure représentée de la figure 5 après une période.

67. [Fig. 8] montre une représentation schématique d'un deuxième exemple de mise en situation du procédé de détection de corrosion selon l'invention.

68. [Fig. 9] montre une représentation de courbes de calibration entre un taux de corrosion et une valeur d'une caractéristique magnétique de deux couches corrodables d'épaisseurs différentes.

## DESCRIPTION DETAILLEE

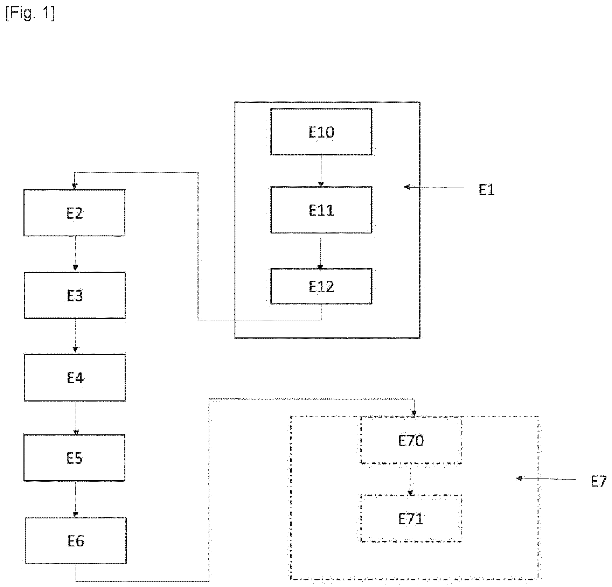

69. La figure 1 montre une représentation schématique d'un bloc diagramme du procédé de détection de corrosion selon l'invention.

70. Le procédé de détection de corrosion d'une couche corrodable ferromagnétique comprend une première étape E1 d'acquisition et de stockage de données dans une mémoire dont au moins des données de différents emplacements Emx, d'au moins un aimant permanent 10 dans un repère tridimensionnel global X, Y, Z et de valeurs d'une caractéristique magnétique parmi la densité de flux (B) ou un ou des moments magnétiques (M), pour chaque aimant (10) dans un repère tridimensionnel propre à l'aimant.

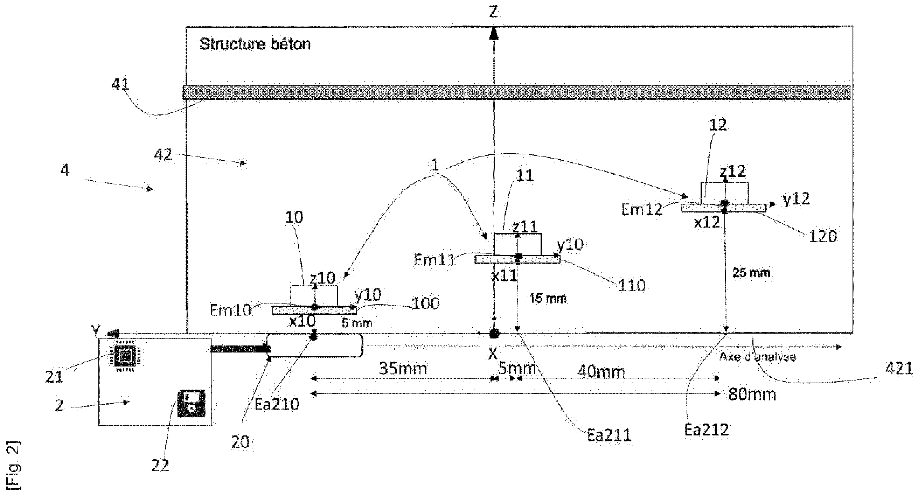

71. La figure 2 montre une représentation schématique d'un premier exemple mise en situation du procédé de détection de corrosion selon l'invention.

72. La figure 2 comprend le repère global X, Y, Z. La figure 2 représente une portion d'une paroi en béton armé 4, appelée ensuite paroi 4, coupée selon l'axe X dans une armature 41 de la paroi 4 et des témoins 1 placés dans un enrobage poreux 42 de la paroi 4.

73. Les témoins 1 sont situés à différentes profondeurs d'une surface d'auscultation 421. En l'occurrence, dans cet exemple, les témoins 1 sont tous situés entre la surface d'auscultation 421 et l'armature 41.

74. Dans un exemple de ce mode de réalisation, les témoins 1 de la paroi 4 sont identiques et chaque témoin 1 comprend un aimant 10, 11, 12 ayant une densité de flux magnétique de 1 tesla. Bien entendu la densité de flux magnétique peut être inférieur ou supérieur à 1 tesla. Dans cet exemple, chaque témoin 1 comprend aussi une couche corrodable en matériaux ferromagnétiques 100, 110, 120.

75. La paroi 4 comprend une surface d'auscultation 421, en l'occurrence dans le plan X,Y. Le plan X, Y permet en outre à un appareil de détection 2 expliqué ensuite, de représenter la position des témoins par projection sur la surface d'osculation 421 et la direction Z représente la profondeur des témoins par rapport à la surface d'auscultation 421. Les témoins 1 sont, dans cet exemple de mode de réalisation, situés à différentes profondeurs par rapport à la surface d'auscultation 421, en l'occurrence, ils sont espacés les uns des autres de 10 mm et à différents emplacements, en l'occurrence situés sur la même valeur de l'axe X (par exemple 1 mètre) et à différentes valeurs suivant l'axe Y, en l'occurrence espacés les uns des autres de 40 mm. Le premier témoin est situé à un emplacement Em10 tel que l'aimant 10 a sa frontière des deux pôles située à +35 mm sur l'axe Y, sa surface en vis-à-vis de sa couche corrodable à +5 mm sur l'axe Z, et à +1 m pour l'axe X, le deuxième témoin est situé à un emplacement Em11 tel que l'aimant 11 a sa frontière des deux pôles située à -5 mm sur l'axe Y, sa surface en vis-à-vis de sa couche corrodable à +15 mm sur l'axe Z et à +1 m pour l'axe X, le troisième témoin est situé à un emplacement Em12 tel que l'aimant 12 a sa frontière des deux pôles située à -45 mm sur l'axe Y, sa surface en vis-à-vis de sa couche corrodable à +25 mm sur l'axe Z et à +1 m pour l'axe X.

76. Chaque témoin 1 est orienté dans l'enrobage poreux 42 tel que la couche de matériaux ferromagnétiques 100, 110, 120 est plus proche de la surface d'auscultation 421 que l'aimant 10, 11, 12.

77. Les témoins peuvent avoir une inclinaison différente les unes des autres par rapport à la surface d'auscultation. L'appareil peut comprendre un moyen de détermination de l'inclinaison de l'aimant en mesurant différentes valeurs d'une caractéristique magnétique. Un exemple d'inclinaison est qu'une face comprenant le nord et le sud soit inclinée par rapport à l'axe Y et/ou X, c'est-à-dire pas parallèle à la surface d'auscultation. Par exemple l'appareil comprend un magnétomètre avec sonde de Hall pour permettre de mesurer les directions et sens du champ magnétique et ainsi en déterminer l'orientation de l'aimant. Par exemple un dôme régulier représentera un aimant positionné tel que la face comprenant le nord et le sud est perpendiculaire à la sonde du magnétomètre permettant d'indiquer que cette face de l'aimant est parallèle à la surface d'auscultation et si le dôme est irrégulier, l'appareil peut comprendre un facteur correctif permettant d'indiquer l'orientation de la surface de l'aimant par rapport à sa sonde.

78. Dans cet exemple, la première étape E1 d'acquisition et de stockage de données dans une mémoire des données de différents emplacements Em10, Em11, Em12, des trois aimants permanents 10, 11, 12 dans le repère tridimensionnel global X, Y, Z est réalisée à l'aide d'un dispositif de détection 2 comprenant un appareil de mesure 20 pour mesurer des valeurs de caractéristique magnétique qui est dans cet exemple la densité de flux magnétique B.

79. La première étape E1 comprend une sous-étape de recherche E10 de signal d'une densité de flux magnétique B en déplaçant l'appareil de mesure 20 contre la surface d'auscultation 421 et lorsqu'un signal d'une densité de flux magnétique B est mesurée, le déplacement de l'appareil de mesure 20 dans une zone limitée jusqu'à obtenir la plus grande valeur de densité de flux magnétique afin d'identifier l'emplacement de l'aimant 10, 11, 12.

80. Le dispositif de détection 2 comprend un processeur 21 et une mémoire 22, configuré pour enregistrer dans la mémoire 22 les valeurs de densité de flux magnétique et d'emplacement lorsque son appareil de mesure 20 a mesuré la valeur de la densité de flux magnétique B la plus importante.

81. La première étape E1 comprend donc une sous-étape d'enregistrement E11 de la valeur B10, B11, B12 du signal la plus importante de la zone limitée ainsi que l'emplacement Emx lorsque l'appareil de mesure 20 a mesuré la valeur de la densité de flux magnétique B la plus importante pour chaque aimant 10, 11, 12.

82. La première étape E1 comprend en outre une sous-étape de déduction E12 de la distance entre l'aimant et l'emplacement Ea210, Ea211, Ea212 du dispositif de détection 2 et l'enregistrement de l'emplacement Em10, Em11, Em12 de chaque aimant 10, 11, 12 permanent dans le repère tridimensionnel global X, Y, Z en fonction de l'emplacement de son appareil de mesure 20 et de la distance déduite. En outre cette sous étape de déduction E12 déduit et enregistre au moins une valeur de caractéristique magnétique de l'aimant dans un repère tridimensionnel x10, y10, z10, propre à l'aimant en fonction de la distance déduite et de la valeur B10, B11, B12 du signal la plus importante ainsi que de la densité de flux magnétique, en l'occurrence une valeur de 1 tesla.

83.

84.

### [Math 1]

$$B(r) = \frac{\mu_0}{4\pi}(3(r.m)r - |r^2|\,m)/(|r^5|)$$

85. Par exemple, la valeur de caractéristique magnétique « densité de flux magnétique B » de l'aimant 10 dans son repère X10, Y10, Z10 est de 76.5 milli-teslas à l'emplacement X= +1000 mm, Y= +35 mm, Z= 0 mm. La valeur de caractéristique magnétique peut être la densité de flux magnétique B ou des moments magnétiques ($\vec{M}$) ou encore l'intensité du champ magnétique H à un point donné.

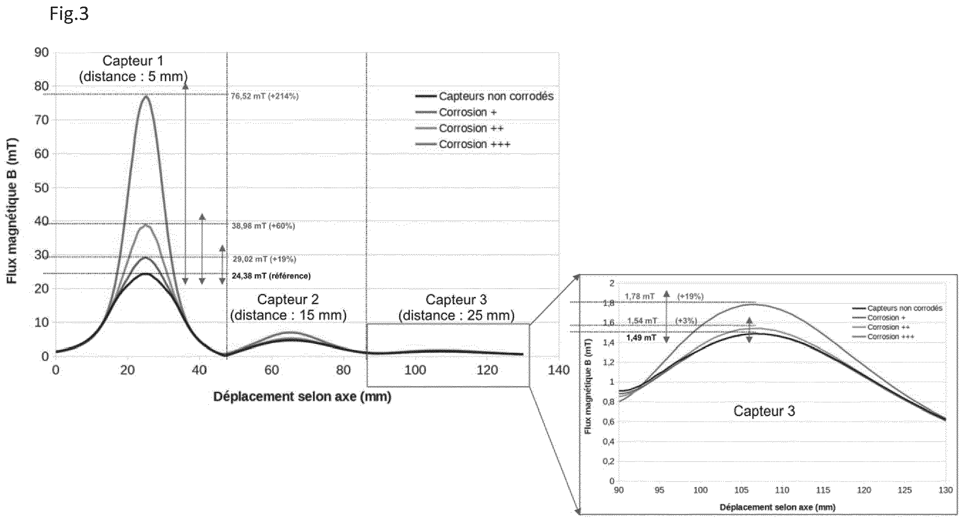

86. La figure 3 montre une représentation schématique d'une courbe de mesure de densité du flux magnétique B des aimants 10, 11, 12 de chaque témoin 1 selon un état de corrosion de leur couche corrodable 100, 110, 120.

87. Cette courbe de mesure peut par exemple, être une courbe de calibration réalisée en laboratoire qui peut être modifiée par expérience, dans laquelle il est mesuré en laboratoire une pluralité de valeurs d'une caractéristique magnétique de témoins comprenant chacun un aimant identique et une couche corrodable initialement identiques (même matériau et même épaisseur) à une même ou différentes distances prédéterminées pour calculer à partir de la loi de Biot Savart expliquée dans la suite un moment magnétique de chaque témoin, dans laquelle les différentes mesures sont réalisées en ayant leurs couches corrodables selon différents taux de corrosion prédéterminés qui peuvent être déterminé en fonction d'une teneur en chlorure dans une structure par expérience, en reliant chaque valeur de moment magnétique estimée à la teneur en chlorure dans une structure correspondante.

88. On peut voir sur cette figure, que lorsque la couche corrodable des témoins 1 n'est pas corrodée, le dispositif de détection 2 mesure par son appareil de mesure 20 une densité du flux magnétique B10 d'environ 24.38mT à l'emplacement Ea210 en vis-à-vis pour le premier témoin, d'environ 5mT à l'emplacement Ea211 en vis-à-vis du deuxième témoin, d'environ 1.49mT à l'emplacement Ea212 en vis-à-vis du troisième témoin.

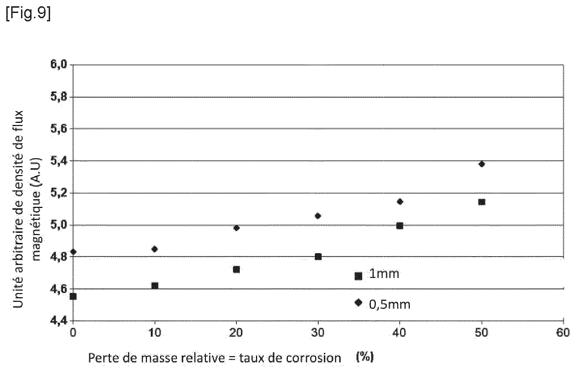

89. La figure 9 représente deux courbes de calibration de deux témoins fictifs réalisées en laboratoire, dans un repère représentant en ordonnée une valeur d'une caractéristique magnétique, ici une unité arbitraire UA dont 1UA égal à 0.05mT et en abscisse la perte de masse relative de la couche corrodable du témoin correspondant ici au taux de corrosion. Dans cet exemple, on a placé un même aimant cylindrique de 8 mm de diamètre et 2 mm d'épaisseur sous deux séries de couches corrodables à différents taux de corrosion pour réaliser les mesures magnétiques. Chaque couche corrodable d'une série était identique à l'état initial. En l'occurrence les couches corrodables à l'état initial (non corrodé) d'une première série avait une épaisseur de 0.5mm et celles de la seconde série avaient une épaisseur de 1mm. Dans cet exemple, chaque couche corrodable est un prisme carré droit ayant leurs faces carrées de dimension 15 x 15 mm. En particulier, des mesures avec l'aimant et le dispositif magnétomètre avec la distance de 3 cm ont été réalisées sur chaque couche corrodable pour assurer que chaque couche corrodable d'une série donne un signal identique aux autres couches corrodables de la même série aux erreurs de mesure près. Les couches corrodables ont ensuite été placées dans une solution NaCl 30 g.L-1 pour accélérer leur corrosion, par exemple par électrolyse dans une solution de 30g de NaCl par litre d'eau, pesées et mesurées leurs valeurs d'une caractéristique magnétique AU par un capteur magnétomètre placé à 3 cm de la surface corrodable de la couche ferromagnétique opposée à l'aimant.

90. On peut voir sur cette figure 9 que plus la couche corrodable est épaisse, plus la valeur d'une caractéristique magnétique mesurée est petite pour un même taux de corrosion mais qu'elles varient sensiblement de façon identique par rapport à leur taux de corrosion. Ainsi, selon un exemple ayant des témoins différents par leur épaisseur de couche corrodable, les témoins ayant une couche corrodable d'épaisseur plus important seront proche de la surface d'auscultation et ceux ayant une plus petite épaisseur plus proche de l'armature permettant ainsi de pouvoir utiliser plus facilement la même plage de mesure d'un dispositif de mesure.

91. Dans cet exemple, la mesure de la perte de masse par rapport à la couche corrodable à l'état initial en pourcentage correspond aux différents taux de corrosion en pourcentage. Le taux de corrosion peut être mesuré différemment par exemple par dimensionnement géométrique.

92. La distance de mesure entre l'appareil de mesure 20 et l'aimant a donc une importante influence sur la valeur mesurée. En effet, on peut voir que pour 1cm de différence de profondeur entre le premier et deuxième témoin, la mesure est divisée dans cet exemple par 5 pour une couche non corrodée et que pour 1cm de différence de profondeur entre le deuxième et troisième témoin, la mesure est divisée dans cet exemple par 3.33 pour une couche non corrodée.

93. En outre, on peut voir que plus la distance de mesure entre l'appareil de mesure 20 est grande, moins la corrosion de la couche corrodable 100, 110, 120, influence la densité de flux magnétique B mesurée. En effet, pour un témoin ayant sa couche corrodée à 100% dans cet exemple, le troisième témoin ayant une distance de mesure de 25mm a une variation de 19% alors que le premier témoin ayant aussi sa couche corrodable corrodée à 100% a une variation de 214% soit 2.14 fois la mesure réalisé à l'instant T0.

94. L'appareil de mesure 20 peut être modifié ou peut avoir différentes configurations ou calibrations pour s'adapter à la sensibilité des champs magnétiques à mesurer.

95. Ainsi, selon un exemple, grâce à la connaissance d'une densité de flux magnétique de 1 tesla, et de la loi de Biot-Savart (déduite des équations de Maxwell) :

$$\mathbf{B(r)} = \frac{\mu_0}{4\pi} \frac{3(\mathbf{r.m})\mathbf{r} - \left|r^2\right|\mathbf{m}}{\left|r^5\right|}$$

96. Ou r = la distance prédéterminée et B(r) la densité de flux mesurée et $\mu_0$ est la perméabilité magnétique du vide et est égale à :

$$- [\mu0 \simeq 4\pi \cdot 10^{-7}\ SI]$$

97. Le dispositif de détection 2 avec son processeur 21 est configuré, en ayant un programme, par exemple, pour calculer et en estimer ou en déduire la valeur du moment $m_{11}^{z}, m_{12}^{z}, m_{13}^{z}$ selon son repère tridimensionnel propre x, y et z à un emplacement Ea210, Ea211, Ea212, qui est enregistré dans une mémoire. L'emplacement enregistré peut être celui acquise à l'étape E1 en déterminant l'emplacement où la valeur d'une caractéristique magnétique mesurée correspond le mieux à l'emplacement en vis à vis d'un témoin. Cette estimation de la valeur du moment magnétique $m_{11}^{z}, m_{12}^{z}, m_{13}^{z}$ est donc réalisée à partir de la loi Biot Savard et de la valeur de densité du flux magnétique B mesurée et de la distance r déduite lors de la sous-étape de déduction de distance r E12 de l'étape E1.

98. Le dispositif de détection 2 mémorise donc en mémoire une valeur d'une caractéristique magnétique acquise à l'étape E1 de chaque aimant 10, 11, 12 selon leur repère à un emplacement prédéterminé qui peut être l'origine.

99. Le procédé comprend en outre une étape de détermination d'un emplacement de l'appareil de mesure 20 dans le repère tridimensionnel global par le processeur 21.

100. Par exemple, l'emplacement déterminé peut être l'emplacement prédéterminé ou un autre emplacement Ea210, Ea211, Ea212 enregistrée si la surface d'auscultation n'a pas changé sinon il peut en déterminer une autre. Notamment, le dispositif de détection 2 peut comprendre une interface homme machine pour guider l'utilisateur pour déplacer l'appareil vers l'emplacement enregistré et en outre par exemple un bouton, pour que l'utilisateur puisse donner l'information que l'emplacement Ea210 ou Ea211 ou Ea212 n'est plus accessible (par exemple gonflement de la paroi 4 dû à un gel/dégel), dans ce cas l'appareil détermine un autre emplacement qui peut par exemple être celui le plus proche de l'emplacement Ea210 ou Ea211 ou Ea212.

101. Le procédé comprend en outre une étape de mesures E3 d'une valeur d'une caractéristique magnétique, ici une densité de flux magnétique B, au moyen de l'appareil de mesure 20 à l'emplacement déterminé, en l'occurrence à chacun des emplacements Ea210, Ea211, Ea212, et d'enregistrement dans une base de données des données concernant la mesure, l'emplacement et la date de la mesure.

102. Le procédé peut comprendre une pluralité d'étapes de détermination d'emplacement E2 et d'étapes de mesures E3 à des emplacements différents dans une zone limitée et en ce que l'estimation de la valeur caractéristique est affinée à chaque mesure de densité de flux magnétique (B) d'un emplacement. Cela peut par exemple être le cas, si la surface d'auscultation est modifiée ou si un agent perturbateur de champ magnétique exige différentes mesures pour réduire le risque d'erreur d'estimation E4 décrit dans la suite. En outre, ces étapes répétées peuvent être réalisées aussi au début lors de l'étape E1 d'acquisition des données expliquée précédemment.

103. Par exemple, la couche corrodable 100, 110, 120 de chaque témoin 1 a subi une corrosion due à une infiltration d'un agent pathogène, par exemple des ions d'une eau salée.

104. La couche corrodable 100, 110, 120 de chaque témoin 1 a une épaisseur de 1mm et est en fer, à l'instant T0 lorsque l'étape E1 a été réalisée. La couche corrodable du témoin peut être dans d'autres matériaux que le fer, tels que le nickel et le cobalt ou encore d'autres alliages.

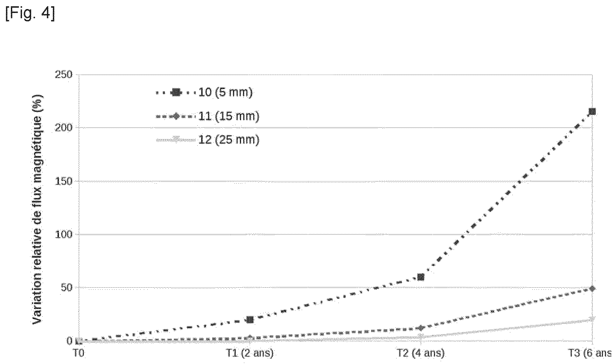

105. La figure 4 représente une courbe représentant la variation relative de flux magnétique B% en fonction du temps des trois témoins selon différent états de corrosion et de distance, par exemple T1 est 2 ans après T0, T2 est 4ans après T0 et T3 6ans après T0. Dans cet exemple, la valeur d'une caractéristique magnétique est un pourcentage de variation d'une densité de flux (B) ou d'un ou des moments magnétiques (M) à un point dans le repère x,y,z propre à l'aimant 10, 11, 12. Le repère propre à l'aimant peut aussi être le repère global.

106. Sur la figure 3, on peut voir que plus la couche corrodable 100, 110, 120 est corrodée, plus la densité de champ magnétique B mesurée à l'emplacement Ea210, Ea211, Ea212, par l'appareil de mesure 20 est importante.

107. Par exemple, à T2, chaque couche corrodable est corrodée de 2/3, c'est-à-dire que la couche corrodable 100, 110, 120 en forme de plaque de fer d'épaisseur de 1mm ne comprend plus que 33% de son épaisseur initiale soit dans cet exemple 0.3mm de fer non-corrodée.

108. Les courbes des figures 3 et 4 peuvent par exemple être des courbes de calibration permettant à l'appareil de détection 2, à l'aide d'un programme dans la mémoire 22 utilisant le processeur 21, de corréler la variation de corrosion d'un type de témoin avec son champ magnétique en fonction de la distance de mesure par la méthode inverse.

109. Le procédé comprend une étape d'estimation E4, effectuée par le dispositif de détection 2 à l'aide de programme dans la mémoire 22 et du processeur 21, d'au moins la valeur d'une caractéristique magnétique, d'au moins un aimant 10,11, 12 selon son repère tridimensionnel propre, en fonction de la densité de flux magnétique B mesurée à l'étape E3 et de l'emplacement Em10, Em11, Em,12 de l'aimant acquis à l'étape E1 à l'emplacement Ea210, Ea211, Ea212 de l'appareil de mesure 20. Ainsi, en modifiant l'emplacement de l'appareil de mesure 20 par rapport à celle mémorisée Ea210, Ea211, Ea212 il y aura une influence importante, même pour 1mm. Le procédé permet à partir de ce nouvel emplacement d'identifier la valeur d'une caractéristique magnétique (B, $\vec{M}$) d'au moins un aimant selon son repère tridimensionnel propre. Le premier emplacement Ea210, Ea211, Ea212 de l'appareil de mesure 20 pour la mesure à l'étape 10 peut être inaccessible pour diverse raison, par exemple une dilatation du mur liée à l'infiltration d'agent, ou encore la chaleur, une couche ajoutée sur la paroi, par exemple liée à une réparation etc...

110. Le procédé comprend donc une étape de comparaison E5 de la valeur d'une caractéristique magnétique (B, $\vec{M}$) d'au moins un aimant, estimée à cet instant à l'étape E4 et celle estimée précédemment à un instant antérieur à l'étape E4 ou acquise à l'étape E10 de ce même aimant. Par « caractéristique magnétique estimée précédemment », on entend ici une comparaison de la valeur d'une caractéristique magnétique (B, $\vec{M}$) d'au moins un aimant déduit avec la mesure réalisée à un instant **T,** par exemple à l'instant T2 et valeur d'une caractéristique magnétique (B, $\vec{M}$) d'au moins un aimant à un instant déduit avec la mesure réalisée à un instant précédent par exemple T-1, dans cet exemple à l'instant T1.

111. Enfin le procédé comprend une étape de déduction E6 d'une corrosion de la couche corrodable 100, 110, 120 entre l'au moins emplacement de l'aimant et l'emplacement de l'appareil de mesure 20 en fonction de la comparaison de valeur d'une caractéristique magnétique à l'étape e) et celle acquise à l'étape a).

112. En effet, si la valeur d'une caractéristique magnétique augmente, on peut en déduire une corrosion.

113. Le procédé peut comprendre en outre dans la mémoire une courbe de calibration de la valeur d'une caractéristique de l'aimant 10, 11, 12 par rapport à la corrosion de la couche corrodable 100, 110, 120 du témoin 1 et en ce que l'étape E6 de déduction d'une corrosion de la couche corrodable 100, 110, 120 est produite par le processeur qui utilise cette courbe pour en déduire une valeur d'état de corrosion de la couche corrodable 100, 110, 120. Par exemple, la courbe de calibration de la corrosion est telle que celle de la figure 3, pour estimer le pourcentage de corrosion de la couche corrodable 100, 110, 120. Le procédé peut donc utiliser une méthode inverse pour déterminer à partir d'une courbe de calibration, réalisée par laboratoire ou par expérience, un taux de corrosion de la couche corrodable liée à une valeur de moment magnétique déduite à partir de la mesure de la valeur d'une caractéristique magnétique.

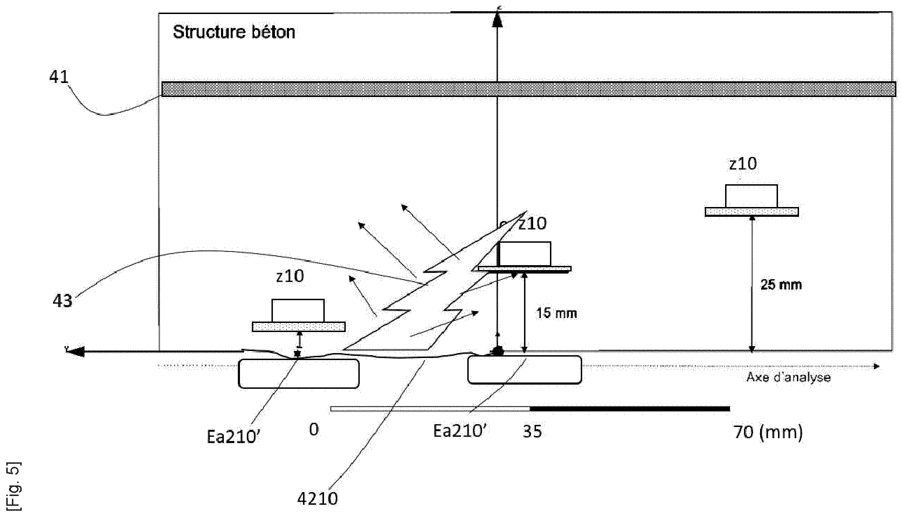

114. La figure 5 représente schématiquement un exemple de situation de la paroi dans lequel une fissure 43, s'est formée permettant une infiltration d'un agent pathogène représentée par des flèches, tel que du chlorure de sodium s'est incrusté dans la paroi avec une déformation 4210 de la surface d'auscultation 421.

115. Des mesures sont réalisées à T1 2ans, T2, et T3 après l'instant T0 dans lequel l'étape d'acquisition 10 de données a été réalisée.

116. Du fait de la déformation de la surface d'auscultation 421 lors de la fissure 43, le procédé comprend à l'étape de détermination E2, la détermination de l'emplacement Ea210', Ea211', (l'emplacement Ea212 pouvant être exploitable) de l'appareil de mesure d'une valeur d'une caractéristique magnétique peut comprendre une sous étape d'indication de l'emplacement, par exemple en indiquant par des signaux visibles, la direction à prendre pour positionner l'appareil de mesure 20 à l'emplacement Ea210', Ea211' déterminé. L'origine du repère global, pour repérer l'appareil de mesure et les aimants dans l'espace, peut être un point physique, par exemple visible sur une sortie de la paroi d'une extrémité d'un piquet de l'armature 41. La détermination du repère peut être manuel à chaque instant et enregistré dans la mémoire par le processeur. La détermination de l'emplacement Ea210' peut aussi être réalisée manuellement en étant imposé par l'opérateur, et le processeur détermine l'emplacement Ea210', Ea211' en fonction de l'origine du repère global. La détermination de l'emplacement Ea210' peut être réalisée par le processeur à l'aide d'information d'un capteur du dispositif de détection 2, de type radar qui peut être infrarouge, ou tout autres types de capteurs pour permettre d'identifier une localisation précise par rapport à une origine d'un repère.

117. En outre, l'appareil peut comprendre un logiciel pour indiquer l'orientation angulaire par rapport au témoin ou corriger la mesure par rapport à cette orientation angulaire. En effet, la surface d'auscultation peut par sa déformation empêcher d'avoir la même orientation que lors de la première acquisition ou de l'ancienne acquisition et ainsi donner une mauvaise mesure en ayant l'appareil orienter différemment par rapport à l'aimant que lors de ses anciennes mesures.

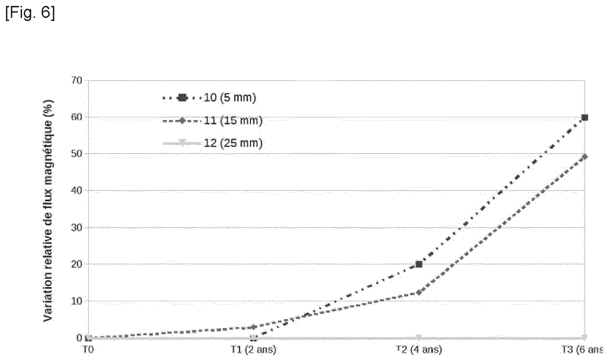

118. La figure 6 montre une représentation schématique temporelle de la variation relative de la densité de flux (B%) ou un ou des moments magnétiques (M), des témoins de l'exemple de la figure 5 à différentes périodes T1, T2, T3 par rapport à T0.

119. Comme on peut voir, à l'instant T1, l'infiltration d'agent pathogène a engendré la corrosion de la couche corrodable 110 du deuxième témoin puisqu'il a eu une détermination d'une variation de flux magnétique d'environ 5% par rapport à l'instant T0 ce qui par exemple selon la courbe de calibration du deuxième témoin peut correspondre à un état de corrosion de 40%. Les deux autres déductions de valeurs d'une caractéristique magnétique des deux autres témoins sont restées stables à l'instant T1. À cet instant T1, l'appareil peut déduire qu'une infiltration d'agent pathogène dans l'enrobage est passé devant ou derrière le premier témoin mais qu'il y a peu de risque qu'il ne soit arrivé à la profondeur de l'armature 41.

120. A l'instant T2, l'infiltration d'agent pathogène a engendré la corrosion de la couche corrodable 100 du premier témoin puisqu'il est déterminé une variation de flux magnétique d'environ 20% soit une corrosion ayant un état de corrosion d'environ 33% selon la courbe de référence de la figure 3 et la couche corrodable 110 du deuxième témoin puisqu'il est déterminé une variation de flux magnétique d'environ 12% soit une corrosion par exemple ayant un état de corrosion d'environ 70%.

121. A partir de l'instant T1, le dispositif de détection 2 peut être configuré pour effectuer un procédé d'estimation de la teneur d'un agent pathogène dans la paroi 4 dans l'emballage poreux comprenant en outre du procédé de détection de corrosion, une étape de déduction d'infiltration d'agent pathogène E7 dans la paroi en fonction d'une courbe de calibration, d'emplacements du ou des témoins et des évaluations de corrosion, du temps entre les mesures entre les mesures déduisant une corrosion de la couche corrodable du témoin. L'étape de déduction d'infiltration d'agent pathogène E7 dans la paroi 4 est fonction des différentes estimations de corrosion d'un ou de plusieurs témoins 1 dans le temps.

122. Le procédé utilise une méthode inverse pour déterminer à partir d'une courbe de calibration non représentée réalisée par laboratoire ou par expérience, l'état d'infiltration d'un agent pathogène. En effet, on peut réaliser une courbe de calibration en laboratoire qui peut être modifiée par expérience, dans laquelle il est mesuré en laboratoire une pluralité de valeurs d'une caractéristique magnétique de témoins comprenant l'aimant et une couche corrodable initialement identiques (même matériau et même épaisseur) à une même ou différentes distances prédéterminées, et ayant leurs couches corrodables selon différents taux de corrosion prédéterminés en fonction d'une teneur en chlorure dans une structure et à partir de la loi de Biot Savart en déterminer une valeur de moment magnétique pour réaliser cette courbe de calibration en reliant chaque valeur de moment magnétique à la teneur en chlorure dans une structure correspondante ou encore utiliser la courbe de calibration de la figure 3 (moment magnétique, distance et taux de corrosion) ou celle de la figure 9 (différents taux de corrosion, valeur d'une caractéristique magnétique à une distance prédéterminée et différentes épaisseurs initiales), avec une autre courbe de calibration comprenant le taux de corrosion et une teneur en chlorure non représentée. Ainsi par la méthode inverse, on peut mesurer ou calculer le moment magnétique du capteur à partir de l'appareil et utiliser la courbe de calibration réalisée en laboratoire pour déterminer la teneur en chlorure de la portion de structure comprenant le témoin en fonction du moment magnétique du capteur, et donc par approche inverse déduire une teneur en chlorure à partir de la mesure du moment magnétique.

123. L'étape de déduction d'infiltration d'agent pathogène E7 comprend une première sous étape d'estimation de la localisation des zones infiltrées E70 dans le repère global par des agents pathogènes dans l'enrobage en fonction des valeurs d'état de corrosion déterminées des différentes couches et du temps entre les mesures.

124. L'étape d'estimation de la teneur d'un agent pathogène E7 comprend une deuxième sous étape de déduction de taux d'infiltration d'agent pathogène E71 dans chaque zone estimée notamment par la méthode inverse avec une courbe de calibration telle que décrite précédemment.

125. Par exemple, à l'instant T1, le dispositif de détection est configuré pour estimer la localisation d'une zone infiltrée par un agent pathogène autour de l'aimant 11 du deuxième témoin du fait de sa couche corrodable 110 ayant un état de corrosion de 40% déduite à l'étape E6 et une déduction de taux d'infiltration d'agent pathogène liée à cet état.

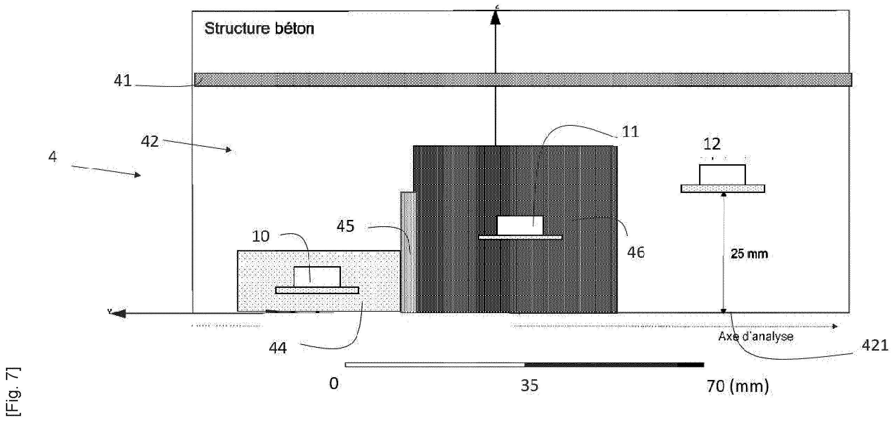

126. La figure 7 représente une représentation graphique d'estimation de la teneur d'un agent pathogène dans la paroi 4 à l'instant T2, dans lequel le dispositif de détection 2 est configuré pour estimer une première zone 44 autour de l'aimant 10 comprenant une certaine taille et une deuxième zone 46 autour de l'aimant 11 comprenant une taille supérieure à celle de la première zone 44 puisque à l'instant T1 une première zone avait été déjà localisée et que la déduction de la valeur d'état de corrosion de la couche corrodable 110 a continué à augmenter.

127. En outre le dispositif de détection 2 est configuré pour estimer en outre une zone intermédiaire 45 entre les deux zones voisines infiltrées 44, 46 non juxtaposée et en déduit un taux d'infiltration d'agent pathogène ayant une valeur entre les deux taux des deux autres zones 44, 46.

128. Le dispositif de détection 2 peut être en outre configuré pour modéliser la paroi 4 avec l'enrobage poreux 42, l'armature 41, l'emplacement des différents témoins ou aimant 10, 11, 12 dans la paroi 4 et une étape de modélisation et d'affichage de l'estimation de la teneur d'un agent dans la paroi en affichant les zones localisées estimées et leur taux d'infiltration déduites, tel que représentée sur la figure 4.

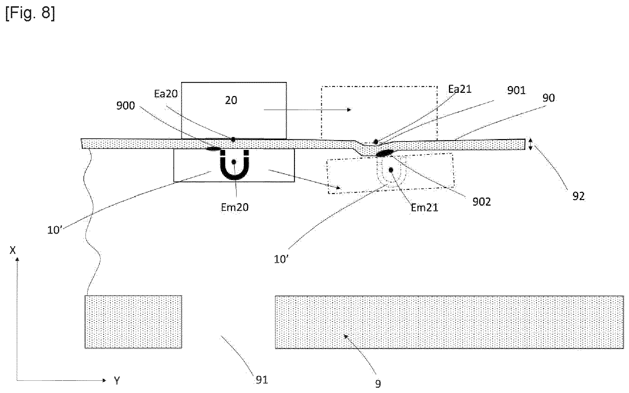

129. La figure 8 représente une représentation schématique d'un deuxième exemple de mise en situation du procédé de détection de corrosion selon l'invention dans lequel, on peut déplacer l'aimant 10 sur une surface d'une couche corrodable 90 ainsi que déplacer l'appareil de mesure 20 sur une surface opposée de la couche corrodable 90.

130. Dans cet exemple, la couche corrodable 90 est une partie d'une carrosserie 9 dans lequel est inséré l'aimant 10 par une ouverture 91. Ainsi le procédé de détection de corrosion permet de détecter la corrosion d'une couche corrodable 90 dont une surface est difficilement accessible.

131. Selon un autre exemple non représenté, c'est l'appareil de mesure 20 qui est à l'intérieur de la carrosserie et l'aimant 10 qui est à l'extérieur sur la couche corrodable 9.

132. Dans cet exemple, l'épaisseur 92 ou les différentes épaisseurs de la couche corrodable 90 est/sont connues et l'étape E1 d'acquisition et de stockage de données dans une mémoire dont au moins des données de différents emplacements peut correspondre à une pluralité d'emplacement Em20 de l'aimant 10 sur la couche corrodable dont la distance de mesure peut changer par exemple en fonction de différentes épaisseurs 92 de la couche corrodable 90. La valeur d'une caractéristique magnétique mesurée de l'aimant 10 peut correspondre au flux (B) ou un ou des moments magnétiques (M) de l'aimant 10 dans son repère. Cette étape peut être réalisée sur la carrosserie ne comprenant pas de couche corrodée.

133. Dans cet exemple, la couche corrodable 9 comprend une zone corrodée 900 et une portion cabossée 901 comprenant aussi une zone corrodée 902.

134. Le dispositif de détection 2 est aussi configuré pour réaliser l'étape de détermination E2 d'un emplacement Ea20, Ea21 de l'appareil de mesure 20 d'une valeur de caractéristique magnétique dans son repère tridimensionnel global X, Y, Z par rapport à l'emplacement de l'aimant Em20, Em21 ou peut être aussi en fonction des anciennes mesures ayant déduit une corrosion ou une suspicion de corrosion par l'utilisateur par exemple à la portion cabossée 901.

135. Le dispositif de détection 2 est configuré pour réaliser, comme dans le premier exemple, l'étape de mesures E3 d'une densité de flux magnétique B et d'enregistrement dans une base de donnée la mesure, l'emplacement Ea20, Em20 de l'appareil de mesure 20 et de l'aimant 10' et la date de la mesure et l'étape d'estimation E4 par le processeur d'au moins la valeur d'une caractéristique magnétique (B%, $\vec{M}$), de l'aimant 10' selon son repère tridimensionnel propre x, y et z et de comparaison E5 de sa valeur d'une caractéristique magnétique (B, $\vec{M}$) estimée et celle estimée précédemment ou acquise à l'étape E1.

136. Enfin, le dispositif de détection 2 est configuré pour réaliser l'étape de déduction E6 de la corrosion de la couche corrodable 9 entre l'au moins emplacement de l'aimant Em20, Em21 et l'emplacement Ea20, Ea21 de l'appareil de mesure 20 en fonction de la comparaison de la valeur d'une caractéristique magnétique acquise à l'étape E1.

137. Par exemple, le dispositif de détection 2 est configuré pour déduire une corrosion entre l'emplacement de l'aimant Em20, et l'emplacement de l'appareil Ea20.

138. Le procédé peut aussi comprendre une étape d'estimation de l'orientation de l'aimant 10'. Par exemple, dans la portion cabossée 901, l'aimant 10' ou l'appareil de mesure 20 peut difficilement être mis l'un en face de l'autre. Par exemple comme sur la figure 8, à l'emplacement de l'aimant Em21, l'aimant 10' peut être incliné par rapport à l'appareil de mesure 20 à l'emplacement Ea21.

139. Ensuite le dispositif de détection 2 peut être configuré pour dans l'étape de détermination de l'emplacement E2 prendre en compte cette orientation et ainsi déterminer en outre l'inclinaison de son appareil de mesure 20 pour être en face des deux pôles de l'aimant 10' de façon équilibrée. Le dispositif de détection 2 peut être configuré pour dans l'étape d'estimation E4 par le processeur d'au moins la valeur d'une caractéristique magnétique (B%, $\vec{M}$) qu'elle soit aussi fonction de l'orientation de l'aimant 10' par rapport à l'appareil de mesure 20.

140. Sauf précision contraire, un même élément apparaissant sur des figures différentes présente une référence unique.

## Revendications

1. Procédé de détection de corrosion d'une couche corrodable ferromagnétique (100, 110, 120, 90) comprenant :

a) une étape ( E1) d'acquisition et de stockage de données dans une mémoire dont au moins des données:

○ de différents emplacements (Em10, Em11, Em12, Em20, Em21) d'au moins un aimant (10, 11, 12, 10') permanent dans un repère tridimensionnel global X, Y, Z,
o de valeur d'une caractéristique magnétique pour chaque aimant (10, 11, 12, 10') dans un repère tridimensionnel propre à l'aimant x, y et z,

b) une étape de détermination (E2) d'un emplacement (Ea210, Ea211, Ea212, Ea20, Ea21) d'un appareil de mesure (20) d'une valeur d'une caractéristique magnétique, distant de l'au moins un aimant, dans le repère tridimensionnel global X, Y, Z, par un processeur (21) d'un dispositif de détection (2),
c) une étape de mesures (E3) d'une valeur d'une caractéristique magnétique (B) au moyen de l'appareil de mesure (20) à l'emplacement (Ea210, Ea211, Ea212, Ea20, Ea21) déterminé à l'étape de détermination (E2), et d'enregistrement, dans une base, la valeur de la mesure, l'emplacement de l'appareil (Ea210, Ea211, Ea212, Ea20, Ea21) et la date de la mesure,
a) une étape d'estimation (E4) par le processeur (21) d'une valeur d'une caractéristique magnétique (B%,B, M), d'au moins un aimant (10, 11, 12 ; 10') selon son repère tridimensionnel propre x, y et z, en fonction de la valeur mesurée à l'étape de mesures (E3) et de l'emplacement (Em10, Em11, Em12, Em20, Em21) de l'aimant (10, 11, 12, 10') acquis à l'étape d'acquisition (E1),
b) une étape de comparaison (E5) de la valeur caractéristique magnétique (B%, B, $\vec{M}$) estimée d'au moins un aimant (10, 11, 12, 10') et celle estimé précédemment ou acquise de cet aimant,
c) une étape de déduction (E6) d'une corrosion de la couche corrodable ferromagnétique (100, 110, 120, 90) entre l'au moins un emplacement (Em10, Em11, Em12, Em20, Em21) de l'aimant (10, 11, 12, 10') et l'emplacement de l'appareil (Ea210, Ea211, Ea212, Ea20, Ea21) en fonction de la comparaison de valeur caractéristique magnétique réalisée à l'étape de comparaison (E5).

2. Procédé de détection de corrosion d'une couche corrodable ferromagnétique (100, 110, 120, 90) selon la revendication précédente, dans lequel chaque aimant (10, 11, 12, 10') est accolé à un élément métallique ferromagnétique formant la couche corrodable (100, 110, 120, 90) et en ce que l'étape d'acquisition et de stockage de données comprend en outre des données de valeurs d'une caractéristique magnétique (B, M) en fonction de l'épaisseur de l'élément métallique non corrodé, avec les composants du repère tridimensionnel propre à l'aimant x, y et z.

3. Procédé de détection de corrosion d'une couche corrodable ferromagnétique (100, 110, 120, 90) selon la revendication précédente, dans lequel la mémoire comprend une courbe de calibration de la valeur d'une caractéristique magnétique de l'aimant (10, 11, 12, 10') par rapport à la corrosion de l'élément métallique accolée à l'aimant (10, 11, 12, 10') et en ce que l'étape de déduction (E6) d'une corrosion de la couche corrodable ferromagnétique (100, 110, 120, 90) utilise cette courbe par une méthode inverse pour en déduire une valeur d'état de corrosion de la couche corrodable ferromagnétique (100, 110, 120, 90).

4. Procédé de détection de corrosion d'une couche corrodable ferromagnétique (100, 110, 120, 90) selon l'une quelconque des revendications précédentes, comprenant en outre une pluralité d'étapes de détermination d'emplacement (E2) et d'étapes de mesures (E3) à des emplacements différents (Ea1, Ea2) dans une zone limitée (Z) et en ce que l'estimation de la valeur caractéristique est affinée à chaque mesure de densité de flux magnétique (B) d'un emplacement (Ea1, Ea2).

5. Procédé de détection de corrosion d'une couche corrodable ferromagnétique (100, 110, 120, 90) selon l'une des revendications précédentes, dans lequel l'étape (E1) d'acquisition et de stockage de données comprend en outre des données d'orientation des pôles des aimants par rapport au point d'origine du repère global.

6. Procédé de détection de corrosion d'une couche corrodable ferromagnétique (100, 110, 120) selon l'une des revendications précédentes, dans lequel un témoin de corrosion (1) est situé dans un enrobage poreux (42) d'une paroi (4), notamment en béton armé, le témoin de corrosion (1) comprenant un des aimants (10, 11, 12) et une couche corrodable ferromagnétique (100, 110, 120) solidaire de l'aimant (10, 11, 12), et dans lequel l'étape de déduction (E6) d'une corrosion d'une couche corrodable ferromagnétique est celle du témoin (1).

7. Procédé de détection de corrosion d'une couche corrodable ferromagnétique (100, 110, 120, 90) selon l'une quelconque des revendications précédentes dans lequel l'étape d'acquisition de donnée d'emplacement (Em10, Em11, Em12, Em20, Em21) et des aimants (10, 11, 12) dans le repère global X, Y, Z comprend :

   a) une sous-étape de recherche (E10) de signal d'une densité de flux magnétique (B) au moyen de l'appareil de mesure (2) et de mesure de la valeur du signal (B10, B11, B12) la plus importante dans une zone limitée,
   b) une sous-étape d'enregistrement (E11) d'un emplacement (Ea2) de l'appareil de mesure (20) dans le repère tridimensionnel global X, Y, Z par un processeur (21) dans une mémoire (22) lorsque l'appareil de mesure (20) a mesuré la valeur du signal (B10, B11, B12) la plus importante,
   c) une sous-étape de déduction (E12) de la distance entre l'aimant (10, 11, 12) et l'emplacement (Ea) et l'enregistrement de l'emplacement (Em10, Em11, Em12) de chaque aimant (10, 11, 12) permanent dans le repère tridimensionnel global X, Y, Z.

8. Procédé d'estimation de la teneur d'un agent pathogène dans une paroi (4) comprenant un emballage poreux (42), comprenant le procédé de détection de corrosion selon l'une des revendications 1 à 7, et une étape de déduction d'infiltration (E7) d'agent pathogène dans la paroi en fonction d'une courbe de calibration, des emplacements (Em10, Em11, Em12, Em20, Em21) de l'aimant (10, 11, 12) de chaque témoin (1) comprenant l'aimant (10, 11, 12) et des évaluations de corrosion de la couche corrodable ferromagnétique (100, 110, 120).

9. Procédé d'évaluation d'infiltration d'agent pathogène dans une paroi comprenant le procédé d'estimation de la teneur d'un agent pathogène dans une paroi (4) selon la revendication précédente dans lequel l'étape de déduction d'infiltration d'agent pathogène (E7) dans la paroi (4) est fonction des différentes estimations de corrosion d'un ou de plusieurs témoins dans le temps.

10. Procédé d'évaluation d'infiltration d'agent pathogène dans une paroi selon la revendication 9 dans lequel l'étape de déduction d'infiltration d'agent pathogène (E7) comprend une

   o Sous étape d'estimation de la localisation des zones infiltrées (E70) dans le repère global d'agent pathogène dans l'enrobage en fonction des emplacements (Em10, Em11, Em12, Em20, Em21) de l'aimant (10, 11, 12) de chaque témoin (1) ayant une couche ferromagnétique corrodée, des informations de valeur d'état de corrosion déterminées des différentes couches corrodables ferromagnétiques et du temps entre les mesures déduisant une corrosion de la couche corrodable ferromagnétique du témoin (1),

∘ de déduction de taux d'infiltration d'agent pathogène (E71) dans chaque zone estimée dans la paroi en fonction d'une courbe de calibration, des emplacements (Em10, Em11, Em12, Em20, Em21) de l'aimant (10, 11, 12) de chaque témoin (1) et des évaluations de corrosion.

11. Procédé d'évaluation d'infiltration d'agent pathogène dans une paroi selon la revendication précédente, comprenant une étape de modélisation de la paroi (4) comprenant un enrobage poreux (42) et une armature (41) coulée dans l'enrobage (42) et de l'emplacement des différents témoins (1) comprenant les aimants (10, 11, 12) dans la paroi (4) et une étape de modélisation d'une évaluation d'infiltration d'agent pathogène dans la paroi (4) en fonction de l'étape de déduction d'infiltration d'agent pathogène.

12. Appareil de détection (2) configuré pour mettre en œuvre le procédé de détection de corrosion selon l'une des revendications 1 à 7, comprenant le processeur (21), la mémoire (22) et l'appareil de mesure de densité de flux (20).

13. Appareil de détection (2) selon la revendication précedente comprenant en outre un dispositif de déplacement de l'appareil de mesure selon au moins deux axes du repère global (X, Y, Z) pour le déplacer face à une surface d'auscultation (421) d'une paroi (4) et en ce que les déplacements de l'appareil de mesure (20) sont commandés par une unité de commande comprenant le processeur (21) en fonction des valeurs de mesures de densité de flux magnétique (B) et/ou d'emplacement (Em) de différents aimants acquis.

**Patentansprüche**

1. Verfahren zur Korrosionserkennung einer ferromagnetischen korrodierbaren Schicht (100, 110, 120, 90), umfassend:

a) einen Schritt zum Erfassen und Speichern (E1) von Daten in einem Speicher, wobei es sich mindestens um folgende Daten handelt:

∘ von verschiedenen Stellen (Em10, Em11, Em12, Em20, Em21) mindestens eines Permanentmagneten (10, 11, 12, 10') in einem globalen dreidimensionalen Bezugssystem X, Y, Z,

∘ Wert einer magnetischen Eigenschaft für jeden Magneten (10, 11, 12, 10') in einem für den Magneten spezifischen dreidimensionalen Bezugssystem x, y und z,

b) einen Schritt zum Bestimmen (E2) einer Position (Ea210, Ea211, Ea212, Ea20, Ea21) eines Messgeräts (20) für einen Wert einer magnetischen Eigenschaft, das von dem mindestens einen Magneten entfernt ist, in dem globalen dreidimensionalen Bezugssystem X, Y, Z, durch einen Prozessor (21) einer Detektionsvorrichtung (2),

c) einen Schritt zum Messen (E3) eines Wertes einer magnetischen Eigenschaft (B) mittels des Messgeräts (20) an der Position (Ea210, Ea211, Ea212, Ea20, Ea21), die im Schritt (E2) bestimmt wurde, und Speichern des Messwerts, der Position des Geräts (Ea210, Ea211, Ea212, Ea20, Ea21) und des Messdatums in einer Datenbank,

a) einen Schritt zum Schätzen (E4) eines Wertes einer magnetischen Eigenschaft (B%, B,$\vec{M}$) mindestens eines Magneten (10, 11, 12; 10') entsprechend seines spezifischen dreidimensionalen Bezugssystems x, y und z in Abhängigkeit von dem in der Messphase (E3) gemessenen Wert und der Position (Em10, Em11, Em12, Em20, Em21) des in dem Erfassungsschritt (E1) erfassten Magneten (10, 11, 12, 10') durch den Prozessor (21)

b) einen Schritt zum Vergleich (E5) des geschätzten magnetischen Kennwerts (B%, B,$\vec{M}$) mindestens eines Magneten (10, 11, 12, 10') und des zuvor geschätzten oder erfassten Werts dieses Magneten,

c) einen Schritt (E6) des Rückschlusses auf eine Korrosion der korrodierbaren ferromagnetischen Schicht (100, 110, 120, 90) zwischen der mindestens einen Position (Em10, Em11, Em12, Em20, Em21) des Magneten (10, 11, 12, 10') und der Position des Geräts (Ea210, Ea211, Ea212, Ea20, Ea21) in Abhängigkeit von dem in dem Vergleichsschritt (E5) durchgeführten Vergleich der magnetischen Kennwerte.

2. Verfahren zur Korrosionserkennung einer ferromagnetischen korrodierbaren Schicht (100, 110, 120, 90) gemäß dem vorherigen Anspruch, bei dem jeder Magnet (10, 11, 12, 10') an einem ferromagnetischen Metallelement, das die korrodierbare Schicht (100, 110, 120, 90) bildet, anliegt, und das **dadurch gekennzeichnet ist, dass** der Schritt des Erfassens und Speicherns von Daten außerdem Daten von Werten einer magnetischen Eigenschaft (B,$\vec{M}$) in Abhängigkeit von der Dicke des nicht korrodierten Metallelements mit den Komponenten des dem Magneten eigenen dreidimensionalen Bezugssystems x, y und z umfasst.

3. Verfahren zur Korrosionserkennung einer korrodierbaren ferromagnetischen Schicht (100, 110, 120, 90) gemäß dem vorherigen Anspruch, bei dem der Speicher eine Kalibrierungskurve des Wertes einer magnetischen Eigenschaft des Magneten (10, 11, 12, 10') in Bezug zur Korrosion des an den Magneten (10, 11, 12, 10') anliegenden Metallelements umfasst, und das **dadurch gekennzeichnet ist, dass** der Schritt des Rückschlusses (E6) auf eine Korrosion der ferromagnetischen korrodierbaren Schicht (100, 110, 120, 90) diese Kurve mit einem umgekehrten Verfahren verwendet, um einen Wert für den Korrosionszustand der ferromagnetischen korrodierbaren Schicht (100, 110, 120, 90) abzuleiten.

4. Verfahren zur Korrosionserkennung einer ferromagnetischen korrodierbaren Schicht (100, 110, 120, 90) gemäß einem der vorstehenden Ansprüche, das außerdem mehrere Schritte zur Bestimmung der Position (E2) und mehrere Schritte der Messung (E3) an verschiedenen Stellen (Ea1, Ea2) in einem begrenzten Bereich (Z) umfasst, und **dadurch gekennzeichnet ist, dass** die Schätzung des Kennwertes bei jeder Messung der magnetischen Flussdichte (B) einer Position (Ea1, Ea2) verfeinert wird.

5. Verfahren zur Korrosionserkennung einer ferromagnetischen korrodierbaren Schicht (100, 110, 120, 90) gemäß einem der vorstehenden Ansprüche, bei dem der Schritt (E1) zum Erfassen und Speichern von Daten zusätzlich Daten zur Ausrichtung der Pole der Magnete in Bezug auf den Nullpunkt des globalen Bezugssystems umfasst.

6. Verfahren zur Korrosionserkennung einer ferromagnetischen korrodierbaren Schicht (100, 110, 120) gemäß einem der vorhergehenden Ansprüche, bei dem ein Korrosionsprüfstück (1) in einer porösen Umhüllung (42) einer Wand (4), insbesondere aus Stahlbeton, angeordnet ist, wobei das Korrosionsprüfstück (1) einen der Magnete (10, 11, 12) und eine mit dem Magneten (10, 11, 12) verbundene ferromagnetische korrodierbare Schicht (100, 110, 120) umfasst, und bei dem der Schritt des Rückschlusses (E6) auf eine Korrosion einer ferromagnetischen korrodierbaren Schicht die des Prüfstücks (1) ist.

7. Verfahren zur Korrosionserkennung einer ferromagnetischen korrodierbaren Schicht (100, 110, 120, 90) gemäß einem der vorstehenden Ansprüche, bei dem der Schritt des Erfassens von Positionsdaten (Em10, Em11, Em12, Em20, Em21) und von Magnetdaten (10, 11, 12) im globalen Bezugssystem X, Y, Z umfasst:

a) einen Teilschritt zum Suchen (E10) eines Signals einer magnetischen Flussdichte (B) mittels der Messvorrichtung (2) und zum Messen des größten Signalwerts (B10, B11, B12) in einem begrenzten Bereich,
b) einen Teilschritt zum Speichern (E11) einer Position (Ea2) der Messvorrichtung (20) im globalen dreidimensionalen Bezugssystem X, Y, Z durch einen Prozessor (21) in einem Speicher (22), wenn die Messvorrichtung (20) den größten Signalwert (B10, B11, B12) gemessen hat,
c) einen Teilschritt zum Ableiten (E12) des Abstands zwischen dem Magneten (10, 11, 12) und der Position (Ea) und zum Speichern der Position (Em10, Em11, Em12) jedes Permanentmagneten (10, 11, 12) im globalen dreidimensionalen Bezugssystem X, Y, Z.

8. Verfahren zur Abschätzung des Gehalts eines Schaderregers in einer Wand (4), die eine poröse Umhüllung (42) umfasst, mit dem Korrosionserkennungsverfahren nach einem der Ansprüche 1 bis 7 und einem Schritt zum Ableiten des Eindringens (E7) des Schaderregers in die Wand anhand einer Kalibrierungskurve der Positionen (Em10, Em11, Em12, Em20, Em21) des Magneten (10, 11, 12) jedes Prüfstücks (1), den Magneten (10, 11, 12) und Korrosionsbewertungen der ferromagnetischen korrodierbaren Schicht (100, 110, 120) umfassend.

9. Verfahren zur Bewertung des Eindringens von Schaderregern in eine Wand, das Verfahren zur Abschätzung des Gehalts eines Schaderregers in einer Wand (4) umfassend, gemäß dem vorherigen Anspruch, bei dem der Schritt zum Ableiten des Eindringens von Schaderregern (E7) in die Wand (4) von den verschiedenen Korrosionsbewertungen eines oder mehrerer Prüfstücke im Laufe der Zeit abhängt.

10. Verfahren zur Bewertung des Eindringens von Schaderregern in eine Wand gemäß Anspruch 9, bei dem der Schritt zum Ableiten des Eindringens von Schaderregern (E7) umfasst:

◦ Einen Teilschritt des Abschätzens der Lage der von Schaderregern betroffenen Bereiche (E70) im globalen Bezugssystem für Schaderreger in der Umhüllung in Abhängigkeit von den Positionen (Em10, Em11, Em12, Em20, Em21) des Magneten (10, 11, 12) jedes Prüfstücks (1) mit einer korrodierten ferromagnetischen Schicht, von den ermittelten Informationen über den Wert des Korrosionszustands der verschiedenen korrodierbaren ferromagnetischen Schichten und der Zeit zwischen den Messungen, woraus eine Korrosion der korrodierbaren ferromagnetischen Schicht des Prüfstücks (1) abgeleitet wird,

o Einen Teilschritt des Ableitens der Eindringrate von Schaderregern (E71) in jedem geschätzten Bereich in der Wand anhand einer Kalibrierungskurve, der Positionen (Em10, Em11, Em12, Em20, Em21) des Magneten (10, 11, 12) jedes Prüfstücks (1) und der Korrosionsbewertungen.

**11.** Verfahren zur Bewertung des Eindringens von Schaderregern in eine Wand gemäß dem vorhergehenden Anspruch, einen Schritt zum Modellieren der Wand (4) umfassend, die eine poröse Umhüllung (42) und eine in die Umhüllung (42) eingegossene Armierung (41) umfasst, und der Position der verschiedenen Prüfstücke (1), die die Magnete (10, 11, 12) in der Wand (4) umfassen, und einen Schritt zum Modellieren einer Bewertung des Eindringens von Schaderregern in die Wand (4) auf der Grundlage des Schritts zum Ableiten des Eindringens von Schaderregern.

**12.** Detektionsvorrichtung (2) zur Durchführung des Korrosionserkennungsverfahrens gemäß einem der Ansprüche 1 bis 7, mit dem Prozessor (21), dem Speicher (22) und der Flussdichtemessvorrichtung (20).

**13.** Detektionsvorrichtung (2) gemäß dem vorherigen Anspruch, die zusätzlich eine Vorrichtung zum Verschieben der Messvorrichtung entlang mindestens zwei Achsen des globalen Bezugssystems (X, Y, Z) umfasst, um sie vor eine Untersuchungsfläche (421) einer Wand (4) zu bewegen, und **dadurch gekennzeichnet, dass** die Verschiebungen der Messvorrichtung (20) von einer den Prozessor (21) umfassenden Steuereinheit gesteuert werden, und zwar in Abhängigkeit von den Messwerten der magnetischen Flussdichte (B) und/oder der Position (Em) verschiedener erfasster Magnete.

**Claims**

**1.** Method for detecting corrosion of a ferromagnetic corrodible layer (100, 110, 120, 90), comprising:

a) A step (E1) of acquiring and storing data in a memory, including at least:

i) Data on the different locations (Em10, Em11, Em12, Em20, Em21) of at least one permanent magnet (10, 11, 12, 10') in a global three-dimensional reference frame (X, Y, Z),

ii) Data on the value of a magnetic characteristic for each magnet (10, 11, 12, 10') in a three-dimensional reference frame specific to the magnet (x, y, z),

b) A step (E2) of determining the location (Ea210, Ea211, Ea212, Ea20, Ea21) of a measuring device (20) for a magnetic characteristic value, distant from the at least one magnet, in the global three-dimensional reference frame (X, Y, Z), by a processor (21) of a detection device (2),

c) A step (E3) of measuring a magnetic characteristic value (B) using the measuring device (20) at the location (Ea210, Ea211, Ea212, Ea20, Ea21) determined in step (E2), and recording in a database the measured value, the location of the device (Ea210, Ea211, Ea212, Ea20, Ea21), and the date of the measurement,

d) A step (E4) of estimating, by the processor (21), a magnetic characteristic value (B%, B, $\vec{M}$) of at least one magnet (10, 11, 12, 10') according to its own three-dimensional reference frame (x, y, z), based on the value measured in step (E3) and the location (Em10, Em11, Em12, Em20, Em21) of the magnet (10, 11, 12, 10') acquired in step (E1),

e) A step (E5) of comparing the estimated magnetic characteristic value (B%, B, M of at least one magnet (10, 11, 12, 10') with a previously estimated or acquired value for this magnet,

f) A step (E6) of deducing corrosion of the ferromagnetic corrodible layer (100, 110, 120, 90) between the location (Em10, Em11, Em12, Em20, Em21) of the magnet (10, 11, 12, 10') and the location of the device (Ea210, Ea211, Ea212, Ea20, Ea21), based on the comparison of magnetic characteristic values performed in step (E5).

**2.** Method for detecting corrosion of a ferromagnetic corrodible layer (100, 110, 120, 90) according to claim 1, wherein each magnet (10, 11, 12, 10') is attached to a ferromagnetic metallic element forming the corrodible layer (100, 110, 120, 90), and wherein the step (E1) of acquiring and storing data further includes data on magnetic characteristic values (B, $\vec{M}$) as a function of the thickness of the non-corroded metallic element, with the components of the three-dimensional reference frame specific to the magnet (x, y, z).

**3.** Method for detecting corrosion of a ferromagnetic corrodible layer (100, 110, 120, 90) according to claim 2, wherein the memory includes a calibration curve of the magnetic characteristic value of the magnet (10, 11, 12, 10') relative to the corrosion of the metallic element attached to the magnet (10, 11, 12, 10'), and wherein the step (E6) of deducing corrosion of the ferromagnetic corrodible layer (100, 110, 120, 90) uses this curve through an inverse method to deduce a corrosion state value of the ferromagnetic corrodible layer (100, 110, 120, 90).

4. Method for detecting corrosion of a ferromagnetic corrodible layer (100, 110, 120, 90) according to any of the preceding claims, further comprising multiple steps of determining locations (E2) and measuring (E3) at different locations (Ea1, Ea2) within a limited area (Z), wherein the estimation of the characteristic value is refined with each measurement of magnetic flux density (B) at a location (Ea1, Ea2).

5. Method for detecting corrosion of a ferromagnetic corrodible layer (100, 110, 120, 90) according to any of the preceding claims, wherein the step (E1) of acquiring and storing data further includes data on the orientation of the poles of the magnets relative to the origin point of the global reference frame.

6. Method for detecting corrosion of a ferromagnetic corrodible layer (100, 110, 120) according to any of the preceding claims, wherein a corrosion indicator (1) is located in a porous coating (42) of a wall (4), particularly made of reinforced concrete, the corrosion indicator (1) comprising one of the magnets (10, 11, 12) and a ferromagnetic corrodible layer (100, 110, 120) secured to the magnet (10, 11, 12), and wherein the step (E6) of deducing corrosion of a ferromagnetic corrodible layer pertains to the indicator (1).

7. Method for detecting corrosion of a ferromagnetic corrodible layer (100, 110, 120, 90) according to any of the preceding claims, wherein the step of acquiring location data (Em10, Em11, Em12, Em20, Em21) and the magnets (10, 11, 12) in the global reference frame (X, Y, Z) includes:

   a) A sub-step (E10) of searching for a magnetic flux density signal (B) using the measuring device (2) and measuring the highest signal value (B10, B11, B12) within a limited area,
   b) A sub-step (E11) of recording the location (Ea2) of the measuring device (20) in the global three-dimensional reference frame (X, Y, Z) by a processor (21) in a memory (22) when the measuring device (20) has measured the highest signal value (B10, B11, B12),
   c) A sub-step (E12) of deducing the distance between the magnet (10, 11, 12) and the location (Ea) and recording the location (Em10, Em11, Em12) of each permanent magnet (10, 11, 12) in the global three-dimensional reference frame (X, Y, Z).

8. Method for estimating the content of a pathogenic agent in a wall (4) comprising a porous coating (42), including the corrosion detection method according to any of claims 1 to 7, and a step (E7) of deducing infiltration of a pathogenic agent in the wall based on a calibration curve, the locations (Em10, Em11, Em12, Em20, Em21) of the magnet (10, 11, 12) of each indicator (1) comprising the magnet (10, 11, 12) and corrosion evaluations of the ferromagnetic corrodible layer (100, 110, 120).

9. Method for evaluating pathogen infiltration in a wall, including the method for estimating the content of a pathogenic agent in a wall (4) according to claim 8, wherein the step (E7) of deducing pathogen infiltration in the wall (4) is based on the different corrosion estimates of one or more indicators over time.

10. Method for evaluating pathogen infiltration in a wall according to claim 9, wherein the step (E7) of deducing pathogen infiltration includes:

    a) A sub-step (E70) of estimating the location of infiltrated zones in the global pathogen agent reference frame within the coating, based on the locations (Em10, Em11, Em12, Em20, Em21) of the magnet (10, 11, 12) of each indicator (1) having a corroded ferromagnetic layer, determined corrosion state value information of the different ferromagnetic corrodible layers, and the time between measurements deducing corrosion of the ferromagnetic corrodible layer of the indicator (1),
    b) A sub-step (E71) of deducing the pathogen infiltration rate in each estimated area in the wall based on a calibration curve, the locations (Em10, Em11, Em12, Em20, Em21) of the magnet (10, 11, 12) of each indicator (1), and corrosion assessments.

11. Method for evaluating pathogen infiltration in a wall according to the preceding claim, including a step of modeling the wall (4) comprising a porous coating (42) and a reinforcement (41) cast in the coating (42), the location of the different indicators (1) comprising the magnets (10, 11, 12) in the wall (4), and a step of modeling an evaluation of pathogen infiltration in the wall (4) based on the step (E7) of deducing pathogen infiltration.

12. Detection apparatus (2) for implementing the corrosion detection method according to any of claims 1 to 7, comprising the processor (21), the memory (22), and the flux density measuring device (20).

13. Detection apparatus (2) according to the preceding claim, further comprising a device for moving the measuring apparatus along at least two axes of the global reference frame (X, Y, Z) to move it facing an auscultation surface (421) of a wall (4), wherein the movements of the measuring apparatus (20) are controlled by a control unit comprising the processor (21) based on the values of magnetic flux density measurements (B) and/or the location (Em) of different magnets acquired.

[Fig. 1]

[Fig. 2]

Fig.3

[Fig. 4]

[Fig. 5]

[Fig. 6]

[Fig. 7]

[Fig. 8]

[Fig.9]

**EP 4 224 142 B1**

**RÉFÉRENCES CITÉES DANS LA DESCRIPTION**

**Documents brevets cités dans la description**

- DE 102017129573 A1
- US 2004100278 A